# EUROPEAN PATENT SPECIFICATION

(11) **EP 1 592 582 B1**
(45) Date of publication and mention of the grant of the patent: **23.05.2007**
(21) Application number: 04707705.2
(22) Date of filing: 03.02.2004
(51) Int. Cl.: B60R 11/02

(54) **INSTALLATION MODULE**
INSTALLATIONSMODUL
MODULE D'INSTALLATION

(30) Priority: 06.02.2003 SE 0300324
(43) Date of publication of application: 09.11.2005
(73) Proprietor: Scania CV AB (publ), 151 87 Södertälje (SE)
(72) Inventor: WAHLQVIST, Rolf, S-619 32 Trosa (SE); HEDEROS, Jesper, S-418 71 Göteborg (SE); BERGSTRÖM, Mårten, S-121 38 Johanneshov (SE)
(86) International application number: PCT/SE2004/000140
(87) International publication number: WO 2004/069599

(56) References cited:
- EP-A1- 0 807 552
- DE-A1- 4 445 826
- DE-A1- 19 951 968
- US-A- 4 640 542

## Description

### Technical field of the invention

The present invention relates to an installation module for fitting in a vehicle. The invention also relates to a vehicle comprising at least one such installation module.

### Background to the invention

Many people use mobile telephones both privately and in their work. In order to be able conveniently to communicate via a mobile telephone when the user is in a vehicle, the mobile telephone is placed in a holder which is intended for the particular model of telephone in such a way that the mobile telephone is readily visible to the driver and does not risk becoming detached from the holder. Holders are usually separate and retrofitted on a dashboard in front of the driver. Dashboards also have a multiplicity of built-in installation modules or holding a mobile telephone. For example, US-6056175-A which discloses the features of the preamble of claim 1 describes an installation device for fitting a mobile telephone releasably in a vehicle whereby the installation device comprises an open housing and a carrier portion which is pivotable into and out of the housing about a vertical spindle. The carrier portion itself has on it a mounting plate which is adapted to a mobile telephone and which is supported for pivoting about a horizontal spindle. However, when the carrier portion with the mounting plate is pivoted into the housing, the mobile telephone cannot be used, which means that the mobile telephone and the carrier portion inevitably protrude from the dashboard when the mobile telephone is to be used and at the same time be supported. This affects the driver's freedom of movement if the mobile telephone has to be used in the vehicle, and entails extra movements for pivoting the carrier portion and the mobile telephone out to the extended state if the mobile telephone has previously been in the retracted state.

EP-807552-A1 also describes a device for holding a mobile telephone in a vehicle. The device comprises a pivotable holder specially adapted to a particular model of mobile telephone. The holder has a retracted state in which the mobile telephone can lie on one side with a front side exhibiting a display screen facing the driver, and an extended state in which the mobile telephone can be removed from the holder. In both the retracted and extended states the mobile telephone can be connected to a power source or a control unit for the remote control via the mobile telephone of various functions external to the mobile telephone. A disadvantage of that device is that the holder is only intended for a certain mobile telephone and is therefore not suitable being installed as part of a dashboard, since the intervals at which mobile telephone users may be expected to change their model of telephone will be shorter than the service life of the vehicle. Another disadvantage is that the mobile telephone lies horizontal, which means that characters appearing on the display screen are viewed at an angle of 90 degrees. This affects readability and makes handling more difficult.

It has also become quite usual to install in utility vehicles such as buses, trucks and tractor units an embedded telematics unit for enabling wireless transmission and reception from and to the vehicle of, for example, data specific to the driver, the journey and/or the vehicle. The information technology unit is often connected to an internal network of a vehicle and to a handheld computer with pressure-sensitive screen. In this context the handheld computer may be used for inputting driver-specific data and for displaying, for example, relevant information concerning the vehicle or the journey. There are adapters which can be fitted to the outside of the dashboard to hold releasably a particular model of handheld computer. This means that the adapter and the handheld computer may mask, for example, indicators and controls on the dashboard. Moreover, utility vehicles are often used by various persons who may sometimes have different models of handheld computer, which means that time is taken to remove the old adapter or attach a further adapter to the dashboard. Just as in the case of mobile telephones, new models frequently arise. For example, handheld computers with built-in systems for radio communication are currently in production which were not available commercially only a few years ago. Moreover, handheld computers in trucks have proved attractive to thieves. A handheld computer in an adapter is readily visible and easy to remove from the adapter, which means that the handheld computer is also easy to steal if someone breaks into the utility vehicle.

### Summary of the invention

One object of the present invention is to provide a device which can be incorporated in a vehicle and easily be adapted to holding different models of portable communication units such as mobile telephones and handheld computers.

A further object is to provide a device of the kind stated above which makes effective and functional use of an allotted space in a vehicle.

The invention relates to an installation module for fitting in a vehicle, which module comprises a housing defining a space which is open in at least one direction, a body which is pivotable into the housing into a retracted state and out of housing into an extended state and has a front side, at least one insert element which comprises means adapted to accommodate and releasably fasten a portable communication unit to the insert element, and means for accommodating and releasably fastening the insert element to the front side of the body, and said body houses a storage space which is accessible when the body is in the extended state and which is concealed when the body is in the retracted state. Hereby is achieved that an insert element for a certain model of communication unit can be replaced by another insert element for a different model without the body and the housing having to be changed. Moreover improved safety/security and functionality is achieved in that objects, such as a handheld computer, can easily be placed in the storage space when the body of the module is in the extended state and be concealed in the storage space when the body of the module is in the retracted state. Throughout the description and claims, portable communication unit denotes such units which can be held with one hand in normal use, such as a mobile telephone or a handheld computer.

The means adapted to accommodating and releasably fastening a portable communication unit to the insert element may be adapted to accommodate and releasably fasten a portable communication unit with a pressure-sensitive display screen to the insert element, and the installation module may comprise a holder adapted to accommodating and releasably holding an oblong pointer for the pressure-sensitive display screen. This makes it possible for a user, before fastening the communication unit, to remove a pointer fastened to the communication unit and to keep the pointer safe and readily accessible beside the communication unit when the latter is placed in the insert element. The pointer can thus easily be used for contact with the pressure-sensitive display screen even when the communication unit has been introduced into the insert element.

The holder may have an oblong accommodating hole which extends in towards the body and is adapted to accommodate the pointer. Hereby is achieved that the holder need not occupy any space and will thus not mask anything else on the installation module or limit anyone's freedom of movement adjacent to the installation module.

In one embodiment, the installation module comprises a cover arranged for movement relative to the body in order to be able to close an aperture to the storage space in both the retracted and extended states of the body. The cover prevents objects from unintentionally falling out of the storage space and into the space of the housing when it is in the closed state. Nor need there be any risk of objects falling out of the storage space when the body is in the retracted state.

The housing may comprise at least one first contact means and the cover may comprise at least one second contact means, in which case the first contact means and the second contact means are arranged to come into mutual contact when the body pivots to the retracted state if the cover is not covering the storage space, thus substantially preventing the cover from moving relative to the housing during a residual pivoting in to the retracted state. The result is that if the storage space is left open when the body is in the extended state, the cover is pushed in front of the aperture to the storage space as the body pivots into the housing.

The means for accommodating and releasably fastening the insert element to the front side may comprise at least a first snaplock means and at least one first hole adapted to the first snaplock means in such a way that the first snaplock means can snap into the first hole. The result is that quick locking of the insert element to the body can be effected in at least one direction of movement.

The first snaplock means may be an integrated part of the insert element, and the first hole may be situated in the body. Hereby easier manufacture of the body, e.g. by compression moulding is achieved.

The means for accommodating and releasably fastening the insert element to the front side may comprise a second snaplock means on the insert element and a second hole adapted to the second snaplock means. In that case, the second snaplock means is preferably directed in a direction substantially opposite to that of the first snaplock means. Hereby a more stable fixing of the insert element to the body is achieved.

The front side may comprise a recess adapted to the insert element. Hereby is achieved that the insert element need not protrude from the body and will therefore not mask anything else on the body or hinder anyone's freedom of movement in the vicinity of the installation module.

The insert element may have a passage which is bounded at a first end and open at a second end and is adapted to accommodate the communication unit via the open end, and the housing may have an upper wall which covers the second end of the passage when the body is in the retracted state. Hereby is achieved that the communication unit cannot be removed from the installation module when the body is in the retracted state.

The installation module may comprise a lock for locking the body relative to the housing in the retracted state, and an unlocking button connected to the lock to make it possible to unlock the lock. The lock may also be adapted to only allowing unlocking if a signal that the vehicle's ignition is switched on is given at the same time as the unlocking button is actuated. The result is protection against theft in that the communication unit cannot be removed when the body is in the retracted state and pivoting out to the extended state can only take place if the ignition is switched on and the unlocking button is actuated. Keeping the communication unit in the storage space when the body is in the retracted state and the ignition is switched off will make stealing the communication unit still more difficult.

The invention also relates to a vehicle comprising at least one installation module as above.

The installation module may form part of a dashboard or part of a centre console between a driver's seat and a passenger seat. This makes it easy for a driver and a passenger sitting beside the driver to see and use the communication unit in both the retracted and extended states. Moreover, objects in the storage space will be easy for at least one of them to reach.

In one embodiment of the vehicle, the vehicle is a truck or tractor unit and the installation module is fitted in a rear wall in a cab. Hereby is achieved that the communication unit can be reached and will be visible from, for example, a bunk situated adjacent to the rear wall.

### Brief description of drawings

The objects, advantages, effects and characteristics of the present invention will be better understood from the following detailed description of embodiments of an installation module when the description is read together with the accompanying drawings, in which:
Fig. 1 is a perspective view of an installation module according to an embodiment of the invention,
Fig. 2 is a perspective view of a housing for the installation module according to the embodiment.
Fig. 3 is a perspective view of a body of the installation module, which body is pivotable relative to the housing,
Fig. 4 is a perspective view of the body viewed from a different position than in Fig. 3,
Fig. 5 is a perspective view of an example of an insert element for the installation module,
Fig. 6 is a perspective view of the installation module fitted in a dashboard,
Fig. 7 depicts a retracted first state of the body relative to the housing, and
Fig. 8 depicts an extended second state of the body relative to the housing.

### Detailed description of embodiments

An embodiment of the invention is depicted in the diagrams and will hereinafter be described in detail. It should be understood, however, that the particular description and diagrams are not intended to limit the invention to the embodiments herein described. On the contrary, the scope of protection for the invention is intended to comprise all modifications and alternative versions which fall within the scope of protection of the invention as defined in the claims.

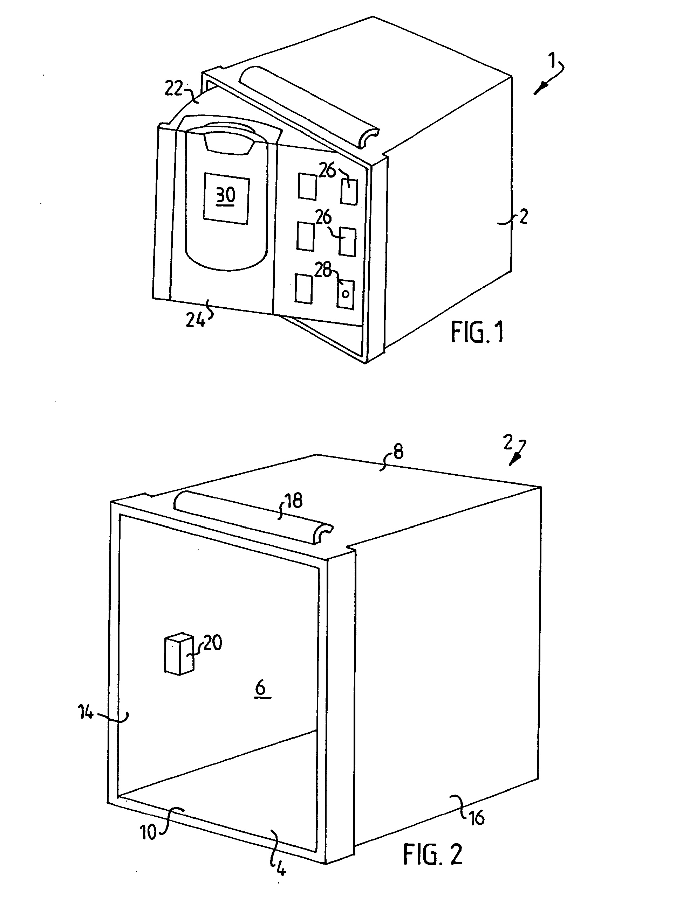

Fig. 1 depicts a perspective view of an installation module 1 as seen obliquely from above. The installation module is adapted to being fitted in a vehicle (not depicted). For example, the installation module may be a unit in a dashboard in front of the driver or in a centre console situated between a driver's seat and a passenger seat alongside the driver's seat in the longitudinal direction of the vehicle. The installation module 1 may of course also be situated elsewhere in the vehicle, e.g. in a roof panel or in a rear wall in a truck cab. An embodiment is described below in which the installation module 1 is adapted to being part of the dashboard, but the description also applies correspondingly in cases where the installation module 1 is intended to be fitted somewhere else in the vehicle.

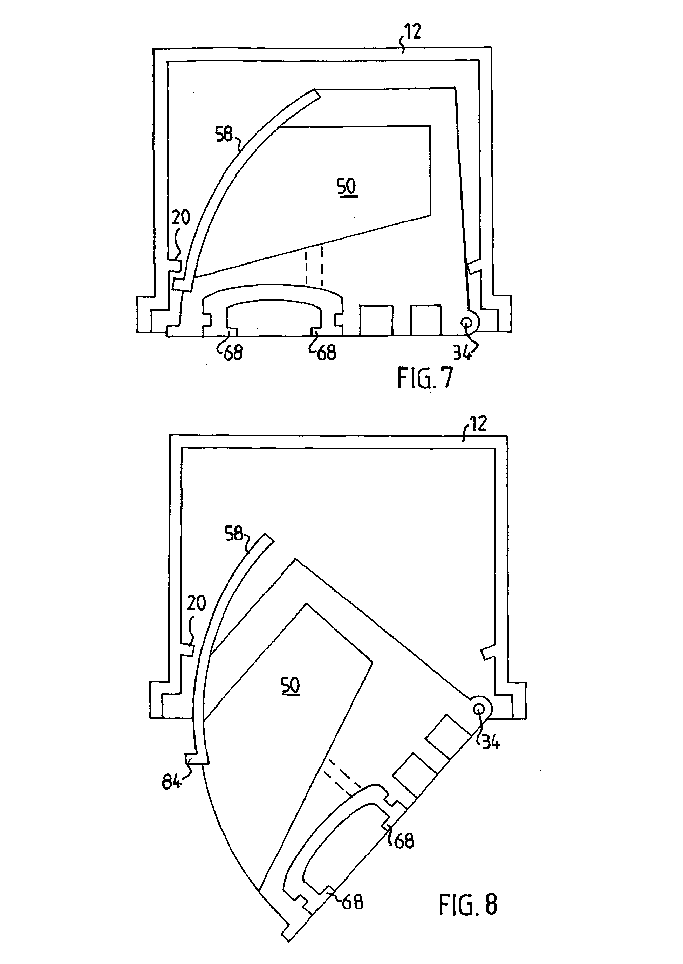

The installation module 1 comprises a housing 2 (see also Fig. 2) made, for example, of plastic and taking the form of a substantially square or rectangular box with an aperture 4 so that the housing has five walls defining an open space 6. For the purposes of this embodiment, the five walls are referred to as an upper wall 8, a lower wall 10, a rear wall 12 (see Fig. 7 and 8), a left wall 14 and a right wall 16. The housing is intended to be fitted in a corresponding recess with a square or rectangular cross-section formed by the surrounding portions of the dashboard and/or supporting elements such as fitting stays. For fastening the housing 2 to the surrounding portions of the dashboard, the housing 2 in this embodiment is provided on its outside adjacent to the aperture 4 with at least one integrated oblong hooking means 18 adapted to engaging with a corresponding hooking means, rib or fitting stay on the surrounding portions of the dashboard so that the housing 2 is fastened in a manner dictated by the shape of the respective means when at least part of the dashboard is fully assembled. Other kinds of fastening means may conceivably be used instead of or in addition to the oblong hooking means 18, e.g. snap-in connecting means and screws. As may be seen in Fig. 2, the left wall 14 also comprises an integrated first contact means 20 in the form of a boss protruding towards the space 6.

The installation module 1 also comprises a body 22 pivotable relative to the housing 2, an insert element 24, a set of buttons 26 and a holder 28 for an oblong pointer for a pressure-sensitive display screen 30 of a communication unit. In this case the communication unit is either a handheld computer or a mobile telephone with pressure-sensitive screen but will in the description hereinafter be referred to solely as the handheld computer.

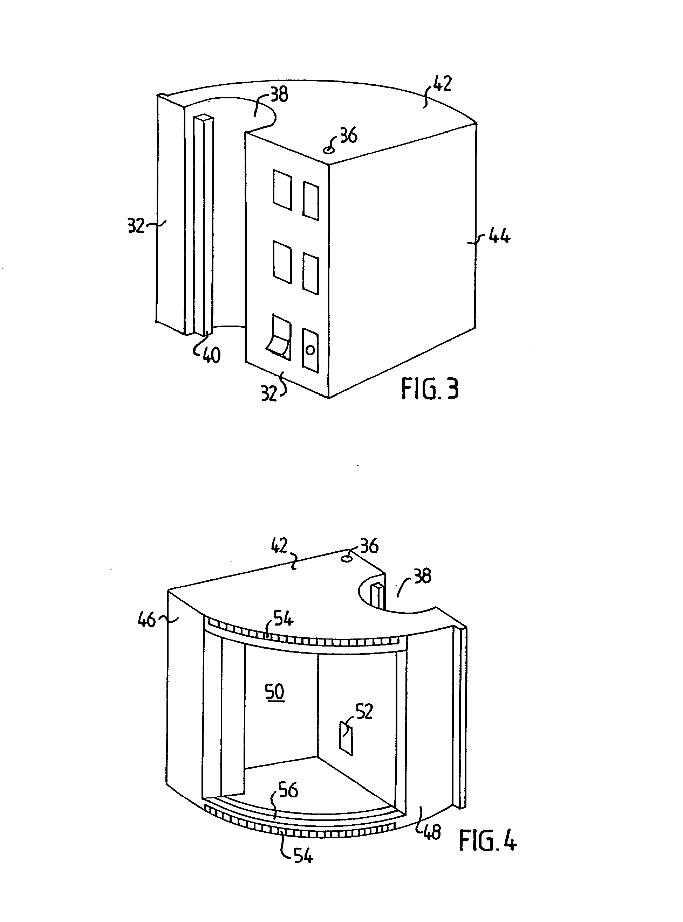

Fig. 3 depicts the body 22, which is pivotable into the housing 2 so that a front side 32 of the body 22 will be substantially in line, or at least parallel, with the aperture 4 (see also Fig. 7). The body 22 is made, for example, of plastic and is also pivotable out from the space 6 so that at least part of the body 22 will be situated outside the housing 2, i.e. in front of the surrounding dashboard as seen from a driver's position when the installation module 1 is fitted in the dashboard (see also Fig. 8). A pivot spindle 34 for the pivoting movement of the body 22 relative to the housing 2 is situated in a region adjacent to a forward corner of the body as seen from the driver's position. In Figs. 1, 7 and 8 the pivot spindle 34 is situated at the forward right corner of the body so as to allow pivoting outwards anticlockwise. Both the pivot spindle 34 and the body 22 may pivot about, for example, a straight rod which is introduced into a hole 36 running through the body 22 and is supported in the housing 2 at both ends of the rod. The body 22 and the housing 2 may of course be manufactured in such a way that the pivot spindle 34 is situated at the forward left corner of the body instead of the forward right corner. Alongside the holder 28 and the buttons 26 on the front side 32 of the body there is in the front side 32 a recess 38 adapted to the insert element 24. The recess 38 is closed by the insert element 24 when the insert element 24 is introduced into the recess 38. In this embodiment, the recess 38 is oblong and runs along the whole front side 32, parallel with the hole 36 for the pivot spindle 34. The recess 38 is provided with means 40 for accommodating and releasably fastening the insert element to the body along the recess 38. The means in this embodiment is an at least partly continuous groove and/or ribs for accommodating and guiding the insert element 24.

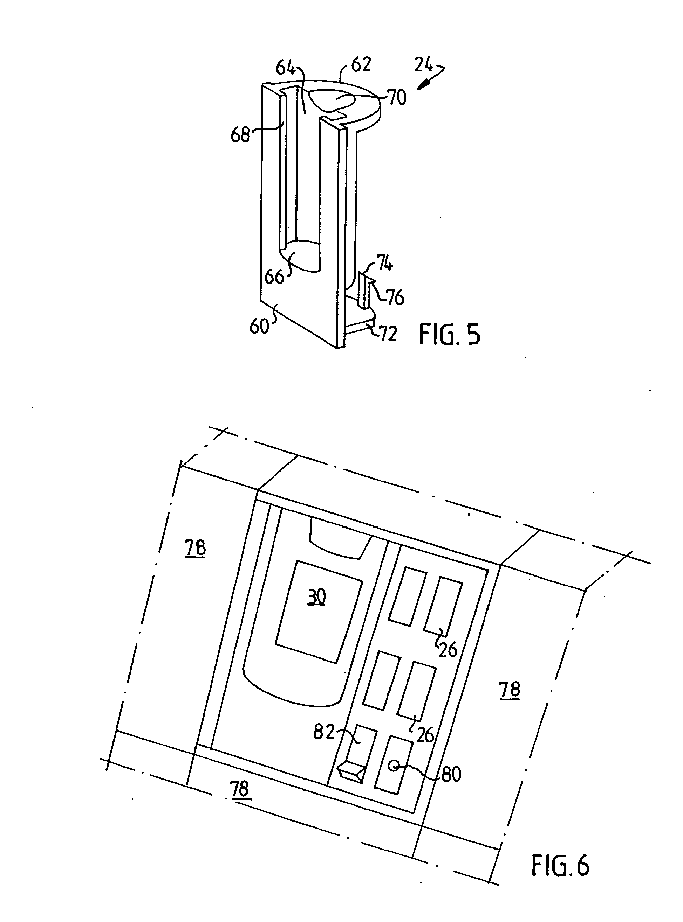

In addition to the front side 32 the body 22 has, a planar outer topside 42, a planar outer underside (not depicted), a planar second outer side 44, a planar third outer side 46 and a curved fourth outer side 48. The curvature of the fourth outer side 48 in the embodiment depicted takes the form of a circular arc of less than 90 degrees. Fig. 4 depicts a schematic perspective view of the body 22 as seen obliquely from above from a different direction than in Fig. 3. It shows within the body 22 a storage space 50 which has an aperture in the fourth outer side 48. The storage space 50 also has, opening into it, a first hole 52 which has an opening in the surface of the recess 38. The first hole defines a further means for accommodating and releasably fastening the insert element to the body. There may also be further holes between the storage space 50 and the recess 38, but they are not depicted. At least part of the curve of the fourth outer side 48 takes the form of two toothed racks running along respective curves. Each of these toothed racks 54 is adapted to being in engagement with its respective gearwheel (not depicted) which is rotatably fastened to the upper wall 8 and lower wall 10 respectively of the housing 2. The gearwheels are so-called friction wheels, i.e. they are provided with silicone to damp the oscillating movement of the body 22 when the latter is pivoting in and out. At the same time, the combination of the toothed racks 54 and the gearwheels means that the pivoting in and out is steady and does not feel jerky. The body 22 has in addition upper and lower guide grooves 56 situated outside and respectively above and below the storage space 50 to accommodate and guide a cover 58 (see Figs. 7 and 8) adapted to being able to close the storage space. Fig. 4 depicts only the lower guide groove 56. Fig. 5 depicts the insert element 24, which is adapted to fitting into and being fastened in the recess 38. The insert element 24 has a planar front surface 60 which, when the insert element 24 is introduced correctly into the recess 38, is in substantially the same plane as the front side 32 of the body 22. The front surface 60 adjoins upwards a planar top surface of a top plate 62 situated substantially perpendicular to the front surface 60 and to a passage 64 in the insert element 24 for accommodating the handheld computer. The passage 64 has its one end bounded by a stop surface 66 and is open at its other end. Outwards, in the same direction as a perpendicular to the front surface 60, the passage 64 is open but is partly closed by a protrusion 68 which extends at least partly along the passage and which forms part of the front surface 60. This means that the handheld computer with its display screen 30 facing in the same direction as the perpendicular to the front surface 60 will be pushed into the passage 64 via the open end until the handheld computer is stopped by the stop surface 66, while at the same time the protrusion 68 prevents the handheld computer from falling out of the passage 64. Further second guide means, such as guide ribs or grooves which are adapted to the handheld computer and which run along and in the passage may be used instead of, or in addition to, the protrusion 68 and the stop surface 66 for releasably holding the handheld computer in position. Adjacent to the open end of the passage 64 is a concave depression 70 in the surface of the insert element 24. The depression 70 makes it possible, for example, for a finger (not depicted) to come into contact with the rear side of the handheld computer. The handheld computer can thereby be gripped and easily pulled out of the passage 64 via the open end.

To fasten it to the wall/walls of the recess 38, the insert element 24 is provided with ribs and/or grooves corresponding to the grooves and ribs in the recess. This means that the insert will be pushed into the recess 38 along the longitudinal direction of the recess 38 from either of the two open short sides of the recess. A support plate 72 integrated in the insert element 24 extends away from the front surface 60 in the opposite direction to the perpendicular to the front surface 60. For reliable locking of the position of the insert element 24 relative to the body 22, the insert element 24 is also provided with an integrated first snaplock means 74 in the form of a wedge-shaped snap-in hook which extends from the support plate 72 substantially parallel with the front surface 60 towards the top plate 62. When the insert element 24 reaches the correct position relative to the recess 38, the first snap-in hook 74 springs into the first hole 52. A stop protrusion 76 on the snap-in hook then prevents the insert element 24 from moving in a first direction of movement. With advantage, the insert element 24 is provided with at least a second snap-lock means in the form of a wedge-shaped snap-in hook (not depicted) which may for example extend from the top plate 62 towards the support plate 72. The second snap-in hook will thus be parallel, but advantageously not in line, with the first snap-in hook. In addition, the second snap-in hook will be directed in the opposite direction in order to be able to lock the insert element 24 in an opposite direction to the first direction of movement. This means that the insert element 24 can be introduced into whichever of the short sides of the recess 38 if desired and be locked firmly to the body 22. If the insert element 24, after locking, has to be replaced by another insert element for a different model of handheld computer or mobile telephone, the body 22 has to be pivoted out and a tool be inserted in, for example, the first hole 52 from the storage space 50 in order to poke the first snap-in hook out of the first hole 52. One direction of movement will thus be freed and the insert element 24 can be pushed out in that direction.

Although this is not depicted in any of the diagrams, the insert element 24 may comprise a connector adapted to being in contact with a corresponding connector on the handheld computer. The connector may for example be arranged to protrude from the stop surface 66. The connector of the insert element 24 will itself be connected to a power source so that a battery unit in the handheld computer can be charged and the handheld computer can be powered. In addition, the connector will be used for information exchange between the handheld computer and a control unit integrated in the vehicle. The handheld computer may for example be caused to present important information on its display screen 30 irrespective of whether the body 22 is in the retracted or an extended state.

Fig. 6 depicts the installation module 1 when fitted as part of a dashboard. It shows the body 22 in the retracted state and its front side 32 and the front surface 60 of the insert element 24 substantially in the same plane as outer panels 78 of the surrounding portions of the dashboard so that the handheld computer does not protrude from the main surface of the dashboard. Moreover, when the body is in the retracted state, the handheld computer cannot be removed from the installation module, since the upper wall 8 at least partly covers the depression 70 and closes the open end of the passage 64. Only when the body is in an extended state can the handheld computer be removed from the installation module 1. When using the handheld computer it is usual to use a substantially circularly cylindrical rod-shaped pointer for pressing on the display screen 30 of the handheld computer in order to press a virtual button presented on the handheld computer or to write characters on the display screen 30. It is usual for the handheld computer to be provided with an external accommodating passage or a circular hole for fastening the pointer to the handheld computer. However, since the handheld computer cannot be removed from the installation module 1 when the body is in its retracted state, the pointer cannot be kept in the handheld computer if it is desired to use the pointer when the body is in its retracted state. Therefore the pointer holder 28 integrated with or fitted in the body 22 is so designed that the pointer can be introduced into an accommodating hole 80 in the holder 28 so that, for example, only a small portion of the pointer protrudes from the accommodating hole 80. The holder 28 thus enables the pointer to be removed from the handheld computer before the handheld computer is pushed into the insert element 24, when the body 22 is in an extended state. Thereafter the pointer is pushed into the accommodating hole 80 so that the pointer can be reached quickly when needed. The simplest embodiment of the holder 28 is taken to be merely to arrange a circular blind hole which extends into the body 22 so that the holder 28 does not protrude from the front side. To reduce the risk of the pointer falling out unintentionally from the blind hole, the blind hole may be sloped slightly downwards relative to the horizontal, so that the force of gravity will tend to keep the pointer in the holder 28. The holder 28 may of course also be of a more sophisticated design without or in combination with a sloping blind hole, e.g. by the walls of the accommodating hole 80 being lined with friction-increasing material such as rubber and/or by making a certain part of the walls of the accommodating hole 80 somewhat flexible but defining a smaller diameter so as to provide locally a certain clamping effect on part of the pointer. A further conceivable embodiment is to equip the holder 28 with a so-called push-push mechanism by arranging in the vicinity of the bottom of the accommodating hole 80 a spring which is partly compressed when a pointer is pushed towards the bottom, so that spring locking elements engage when the spring has reached a predetermined state. When it is desired to remove the pointer from the holder 28, the spring is further compressed, by pushing the pointer down further, so that the locking elements lose their grip on the spring and the spring pushes the pointer out.

Fig.6 and Fig. 7 also illustrate that when the body is in the retracted state the storage space 50 is neither visible nor accessible from outside. This means that the storage space 50 can with advantage be used for storing objects which it is not desirable that they be visible if, for example, the driver leaves the vehicle for a while but does not wish to take with him valuable objects such as, for example, mobile telephone, handheld computer, passport, credit card and money. The installation module 1 is preferably provided with some kind of lock known within the field of technology for automatically locking the body 22 to the housing 2 when the body 22 is pivoted into the retracted state. Such a lock may be an electronically controlled lock or a mechanically controlled lock which is opened by pressing an unlocking button 82 on the front side 32 of the body 22. For extra security the lock may be connected to another system integrated in the vehicle so that the lock can be arranged to open only if two or more conditions are fulfilled. In addition to the unlocking button 82 having to be actuated, a second condition may be that the ignition must be switched on. This prevents the possibility that thieves breaking in could achieve access to the storage space 50 without having access to the vehicle's ignition key. As regards pivoting the body 22 out, this can be effected automatically by a spring device (not depicted) which tends to push the body out to the extended position. An example of this spring device is a preloaded coil spring at each end of the pivot spindle 34 whereby each coil spring has its one end pressing against the housing 2 and its other end pressing against the body 22 in a direction outwards from the space 6 of the housing. Other automatic devices for pivoting the body out may comprise a gearwheel which is driven by an electric motor and is in contact with one of the toothed racks, whereby the electric motor rotates the gearwheel for a certain time immediately after the lock has been unlocked.

As depicted in Figs. 7 and 8, the aperture to the storage space 50 in the fourth outer side 48 is closed by the cover 58 which is movable along at least part of the fourth outer side 48 to prevent objects in the storage space 50 from being unintentionally ejected from the storage space 50 when the body 22 is in the retracted state. This might happen, for example, if the vehicle slides on a relatively sharply sloping running surface or on a bend. The cover 58 moves along the upper and lower guide grooves 56 on the body 22 and has a second contact means 84 in the form of a protruding portion directed away from the body 22 on a front edge situated nearest to the front side 32 of the body. When the body is in an extended state, manual movement of the cover 58 is facilitated by the protruding portion making it easier to apply manual force. The boss 20 on the left wall 14 is so adapted that when the body 22 pivots into the housing 2 the boss 20 comes into contact with the protruding portion 84 and prevents continued movement of the cover 58 relative to the housing 2 if the storage space 50 has for any reason not been closed by the cover 58 before the pivoting in of the body. The cover 58 will thus automatically close the storage space 50 when the body is in the retracted state even if someone forgets to close the storage space 50 before the pivoting in of the body commences.

Although the housing 2 described above is generally right-angled, it should be understood that the design of the housing may be of a multiplicity of different kinds within the scope of the invention. For example, the shape of the housing may be better adapted in pure shape terms to the third and fourth outer sides 46 and 48 of the body 22 so that part of the housing also exhibits a curved surface.

The body may conceivably also be manufactured with geometry other than that depicted. For example, it might take the form of a right-angled figure with no curved surface or of an L-shaped element whereby the foot of the L constitutes the front side of the body. Nor need the recess 38 be taken as extending along the whole front side 32, as it may be bounded, precisely like the passage 64 in the insert element 24, by a stop surface. Instead of being an integrated portion of the body 22 or a part fitted to the body, the holder 28 may be an integrated portion of the insert element.

## Claims

1. An installation module (1) for fitting in a vehicle, which installation module comprises a housing (2) defining a space (6) which is open in at least one direction, a body (22) which is pivotable into the housing (2) into a retracted state and out of the housing (2) into an extended state and comprises a front side (32), and at least one insert element (24) which comprises means adapted to accommodate and releasably fasten a portable communication unit to the insert element (24), **characterised by** means for accommodating and releasably fastening the insert element (24) to the front side (32) of the body (22) and that the body (22) houses a storage space (50) which is accessible when the body (22) is in the extended state and which is concealed when the body is in the retracted state.

2. An installation module (1) according to claim 1, **characterised in that** the means adapted to accommodate and releasably fasten a portable communication unit to the insert element (24) is adapted to accommodating and releasably fastening a portable communication unit with a pressure-sensitive display screen (30) to the insert element (24) and that the installation module (1) comprises a holder (28) adapted to accommodating and releasably holding an oblong pointer for the pressure-sensitive display screen (30).

3. An installation module (1) according to claim 2, **characterised in that** the holder (28) has an oblong accommodating hole (80) which extends in towards the body (22) and which is adapted to accommodate the pointer.

4. An installation module (1) according to any one of the foregoing claims, **characterised by** a cover (58) which is arranged for movement relative to the body (22) in order to be able to close an aperture for the storage space (50) in both the retracted and extended states of the body.

5. An installation module (1) according to claim 4, **characterised in that** the housing (2) comprises at least one first contact means (20) and the cover (58) comprises at least one second contact means (84), whereby the first contact means (20) and the second contact means (84) are arranged to come into mutual contact during pivoting in of the body (22) to the retracted position if the cover (58) does not close the storage space (50), so that the cover (58) is substantially preventing from moving relative to the housing (2) during a residual pivoting in to the retracted state.

6. An installation module (1) according to any one of the foregoing patent claims, **characterised in that** the means for accommodating and releasably fastening the insert element (24) to the front side (32) comprises at least one first snaplock means (74) and at least one first hole (52) adapted to the first snaplock means (74) in such a way that the first snaplock means (74) can snap into the first hole (52).

7. An installation module (1) according to claim 6, **characterised in that** the first snaplock means (74) forms an integral part of the insert element (24), and the first hole (52) is situated in the body (22).

8. An installation module (1) according to claim 7, **characterised in that** the means for accommodating and releasably fastening the insert element (24) to the front side (32) comprises a second snaplock means on the insert element (24) and a second hole adapted to the second snaplock means, and that the second snaplock means is directed in a direction substantially opposite to that of the first snaplock means (74).

9. An installation module (1) according to any one of the foregoing claims, **characterised in that** the front side (32) comprises a recess (38) adapted to the insert element (24).

10. An installation module (1) according to claim 9, **characterised in that** the insert element (24) has a passage (64) which is bounded at a first end and open at a second end and which is adapted to accommodate the communication unit via the open end, and the housing (2) has an upper wall (8) which in the retracted state of the body (22) covers the second end of the passage (64).

11. An installation module (1) according to any one of the foregoing claims, **characterised by** a lock for locking the body (22) relative to the housing (2) in the retracted state, and an unlocking button (82) connected to the lock in order to be able to unlock the lock, and that the lock is adapted to only allow unlocking if a signal that the vehicle's ignition is switched on is given at the same time as the unlocking button (82) is actuated.

12. A vehicle comprising at least one installation module (1) according to claim 1.

13. A vehicle according to claim 12, **characterised in that** the installation module (1) constitutes part of a dashboard.

14. A vehicle according to claim 12, **characterised in that** the installation module (1) constitutes part of a central console between a driver's seat and a passenger seat.

15. A vehicle according to claim 12, **characterised in that** the vehicle is a truck or tractor unit and the installation module (1) is fitted in a rear wall in a cab.

## Patentansprüche

1. Installationsmodul (1) zum Einsetzen in ein Fahrzeug, wobei das Installationsmodul aufweist, ein Gehäuse (2) das einen Raum (6) begrenzt, der in wenigstens einer Richtung offen ist, einen Körper (22), der in das Gehäuse in einen zurückgezogenen Zustand und aus dem Gehäuse (2) heraus in einen ausgeklappten Zustand verschwenkbar ist und eine Vorderseite (32) umfasst, und wenigstens ein Einsetzelement (24), das Mittel umfasst, die dazu ausgelegt sind, eine portable Kommunikationseinheit aufzunehmen und entfernbar an dem Einsetzelement (24) zu befestigen, **gekennzeichnet durch** Mittel zum Aufnehmen und entfernbaren Befestigen des Einsetzelements (24) an der Vorderseite (32) des Gehäuses (22), und dass der Körper (22) einen Speicherraum (50) aufweist, der zugänglich ist, wenn sich der Körper (22) in der ausgeklappten Stellung befindet, und der verborgen ist, wenn sich der Körper in der eingeklappten Stellung befindet.

2. Installationsmodul (1) nach Anspruch 1,
**dadurch gekennzeichnet, dass** das Mittel zum Aufnehmen und lösbaren Befestigen einer portablen Kommunikationseinheit an dem Einsetzelement (24) dazu ausgelegt ist, eine portable Kommunikationseinheit mit einem druckempfindlichen Anzeigeschirm (30) aufzunehmen und an dem Einsetzelement (24) lösbar zu befestigen, und dass das Installationsmodul (1) einen Halter (28) umfasst, der dazu ausgelegt ist, einen länglichen Zeiger für den druckempfindlichen Anzeigeschirm (30) aufzunehmen und lösbar zu halten.

3. Installationsmodul (1) nach Anspruch 2,
**dadurch gekennzeichnet, dass** der Halter (28) ein längliches Aufnahmeloch (80) aufweist, das sich zum Körper (22) hin erstreckt und das dazu ausgelegt ist, den Zeiger aufzunehmen.

4. Installationsmodul (1) nach einem der vorangehenden Ansprüche, **gekennzeichnet durch** eine Abdeckung (58), die für eine Bewegung relativ zum Körper (22) angeordnet ist, um dazu in der Lage zu sein, eine Öffnung für den Speicherraum (50) sowohl in der eingeklappten als auch in der ausgeklappten Stellung des Körpers zu schließen.

5. Installationsmodul (1) nach Anspruch 4,
**dadurch gekennzeichnet, dass** das Gehäuse (2) wenigstens ein erstes Kontaktmittel (20) umfasst, und dass die Abdeckung (58) wenigstens ein zweites Kontaktmittel (84) umfasst, wobei das erste Kontaktmittel (20) und das zweite Kontaktmittel (84) derart angeordnet sind, dass sie während des Einschwenkens des Körpers (22) in die eingeklappte Stellung in gegenseitigen Kontakt gelangen, wenn die Abdeckung (58) den Speicherraum (50) nicht schließt, so dass die Abdeckung (58) im Wesentlichen an einer Bewegung relativ zu dem Gehäuse (2) während einer restlichen Schwenkbewegung in die eingeklappte Stellung gehindert wird.

6. Installationsmodul (1) nach einem der vorangehenden Patentansprüche,
**dadurch gekennzeichnet, dass** das Mittel zum Aufnehmen und lösbaren Befestigen des Einsetzelements (24) an der Vorderseite (32) wenigstens ein erstes Schnappverriegelungsmittel (74) und wenigstens ein erstes Loch (52) umfasst, das derart an das erste Schnappverriegelungsmittel (74) angepasst ist, dass das erste Schnappverriegelungsmittel (74) in das erste Loch (52) einschnappen kann.

7. Installationsmodul (1) nach Anspruch 6,
**dadurch gekennzeichnet, dass** das erste Schnappverriegelungsmittel (74) einen integralen Teil des Einsetzelements (24) bildet und das erste Loch (25) in dem Körper (22) angeordnet ist.

8. Installationsmodul (1) nach Anspruch 7,
**dadurch gekennzeichnet, dass** das Mittel zum Aufnehmen und lösbaren Befestigen des Einsetzelements (24) an der Vorderseite (32) ein zweites Schnappverriegelungsmittel an dem Einsetzelement (24) und ein zweites Loch aufweist, das an das zweite Schnappverriegelungsmittel angepasst ist, und dass das zweite Schnappverriegelungsmittel in einer Richtung im Wesentlichen entgegengesetzt zu der des ersten Schnappverriegelungsmittels (74) ausgerichtet ist.

9. Installationsmodul (1) nach einem der vorangehenden Ansprüche,
**dadurch gekennzeichnet, dass** die Vorderseite (32) eine Ausnehmung (38) aufweist, die an das Einsetzelement (24) angepasst ist.

10. Installationsmodul (1) nach Anspruch 9,
**dadurch gekennzeichnet, dass** das Einsetzelement (24) einen Durchgang (64) aufweist, der an einem ersten Ende begrenzt ist und an einem zweiten Ende offen ist und der dazu ausgelegt ist, die Kommunikationseinheit über das offene Ende aufzunehmen, und wobei das Gehäuse (2) eine obere Wand (8) aufweist, die in dem eingeklappten Zustand des Körpers (22) das zweite Ende des Durchgangs (64) abdeckt.

11. Installationsmodul (1) nach einem der vorangehenden Ansprüche, **gekennzeichnet durch** eine Verriegelung zum Verriegeln des Körpers (22) relativ zum Gehäuse (2) in der eingeklappten Stellung und **durch** einen Entriegelungsknopf (82), der mit der Verriegelung verbunden ist, um dazu in der Lage zu sein, die Verriegelung zu entriegeln, und dass die Verriegelung dazu ausgelegt ist, lediglich dann eine Entriegelung zuzulassen, wenn ein Signal, dass die Fahrzeugzündung eingeschaltet wurde, zur gleichen Zeit ausgegeben wird, wie der Entriegelungsknopf (82) betätigt wird.

12. Fahrzeug umfassend wenigstens ein Installationsmodul (1) nach Anspruch 1.

13. Fahrzeug nach Anspruch 12,
**dadurch gekennzeichnet, dass** das Installationsmodul (1) einen Teil des Armaturenbretts bildet.

14. Fahrzeug nach Anspruch 12,
**dadurch gekennzeichnet, dass** das Installationsmodul (1) einen Teil der Mittelkonsole zwischen einem Fahrersitz und einem Beifahrersitz bildet.

15. Fahrzeug nach Anspruch 12,
**dadurch gekennzeichnet, dass** das Fahrzeug ein Lastkraftwagen oder eine Zugeinheit ist und dass Installationsmodul (1) in eine Rückwand in einer Kabine eingesetzt ist.

## Revendications

1. Module d'installation (1) destiné à équiper un véhicule, ledit module d'installation comprenant un logement (2) définissant un espace (6) qui est ouvert dans au moins une direction, un corps (22) qui peut pivoter dans le logement (2) dans un état rétracté et hors du logement (2) dans un état déployé, et comprenant un côté avant (32), et au moins un élément d'insert (24) comprenant un moyen conçu pour recevoir et attacher de manière libérable un dispositif de communication portatif à l'élément d'insert (24), **caractérisé par** un moyen permettant de recevoir et d'attacher de manière libérable l'élément d'insert (24) au côté avant (32) du corps (22) et en ce que le corps (22) comporte un espace de stockage (50), qui est accessible lorsque le corps (22) est dans l'état déployé et qui est caché lorsque le corps est dans l'état rétracté.

2. Module d'installation (1) selon la revendication 1, **caractérisé en ce que** le moyen conçu pour recevoir et attacher de manière libérable un dispositif de communication portatif à l'élément d'insert (24) est conçu pour recevoir et attacher de manière libérable un dispositif de communication portatif comportant un écran d'affichage sensible à la pression (30) à l'élément d'insert (24) et **en ce que** le module d'installation (1) comprend un support (28) conçu pour recevoir et soutenir de manière libérable un pointeur allongé destiné à l'écran d'affichage sensible à la pression (30).

3. Module d'installation (1) selon la revendication 2, **caractérisé en ce que** le support (28) comporte un orifice de réception allongé (80) qui s'étend à l'intérieur en direction du corps (22) et qui est conçu pour recevoir le pointeur.

4. Module d'installation (1) selon l'une quelconque des revendications précédentes, **caractérisé par** un couvercle (58) qui est agencé de manière à se déplacer par rapport au corps (22) afin de pouvoir fermer une ouverture de l'espace de stockage (50) dans les états rétracté et déployé du corps.

5. Module d'installation (1) selon la revendication 4, **caractérisé en ce que** le logement (2) comprend au moins un premier moyen de contact (20) et **en ce que** le couvercle (58) comprend au moins un second moyen de contact (84), moyennant quoi le premier moyen de contact (20) et le second moyen de contact (84) sont agencés pour venir en contact mutuel pendant le pivotement du corps (22) vers l'intérieur, vers la position rétractée, si le couvercle (58) ne ferme pas l'espace de stockage (50), de sorte que le couvercle (58) empêche sensiblement le déplacement relatif vers le logement (2) pendant un pivotement résiduel dans l'état rétracté.

6. Module d'installation (1) selon l'une quelconque des revendications précédentes, **caractérisé en ce que** le moyen permettant de recevoir et d'attacher de manière libérable l'élément d'insert (24) au côté avant (32) comprend au moins un premier moyen de verrouillage par accrochage (74) et au moins un premier orifice (52) adapté au premier moyen de verrouillage par accrochage (74), de manière à ce que le premier moyen de verrouillage par accrochage (74) puisse s'accrocher en entrant dans le premier orifice (52).

7. Module d'installation (1) selon la revendication 6, **caractérisé en ce que** le premier moyen de verrouillage par accrochage (74) fait partie intégrante de l'élément d'insert (24) et le premier orifice (52) est situé dans le corps (22).

8. Module d'installation (1) selon la revendication 7, **caractérisé en ce que** le moyen permettant de recevoir et d'attacher de manière libérable l'élément d'insert (24) au côté avant (32) comprend un second moyen de verrouillage par accrochage sur l'élément d'insert (24) et un second orifice adapté au second moyen de verrouillage par accrochage, et **en ce que** le second moyen de verrouillage par accrochage est dirigé dans une direction sensiblement opposée à celle du premier moyen de verrouillage par accrochage (74).

9. Module d'installation (1) selon l'une quelconque des revendications précédentes, **caractérisé en ce que** le côté avant (32) comprend un évidement (38) adapté à l'élément d'insert (24).

10. Module d'installation (1) selon la revendication 9, **caractérisé en ce que** l'élément d'insert (24) comporte un passage (64) qui est collé au niveau d'une première extrémité et ouvert au niveau d'une seconde extrémité et qui est conçu pour recevoir le dispositif de communication par l'extrémité ouverte, et **en ce que** le logement (2) comporte une paroi supérieure (8) qui, dans l'état rétracté du corps (22), couvre la seconde extrémité du passage (64).

11. Module d'installation (1) selon l'une quelconque des revendications précédentes, **caractérisé par** un verrou destiné à verrouiller le corps (22) par rapport au logement (2) dans l'état rétracté, et un bouton de déverrouillage (82) relié au verrou afin de pouvoir déverrouiller le verrou, et **caractérisé en outre en ce que** le verrou est conçu pour permettre le déverrouillage uniquement si un signal indiquant que l'allumage du véhicule est activé est donné au moment où le bouton de déverrouillage (82) est actionné.

12. Véhicule comprenant au moins un module d'installation (1) selon la revendication 1.

13. Véhicule selon la revendication 12, **caractérisé en ce que** le module d'installation (1) fait partie d'un tableau de bord.

14. Véhicule selon la revendication 12, **caractérisé en ce que** le module d'installation (1) fait partie d'une console centrale entre le siège du conducteur et un siège de passager.

15. Véhicule selon la revendication 12, **caractérisé en ce que** le véhicule est un camion ou un tracteur et **en ce que** le module d'installation (1) est encastré dans une paroi arrière de la cabine.
